# EUROPEAN PATENT APPLICATION

(11) **EP 4 600 005 A1**
(43) Date of publication of application: **13.08.2025**
(21) Application number: 25155878.9
(22) Date of filing: 04.02.2025
(51) Int. Cl.: B28B 11/00, B28B 11/04, B29C 64/165, B41J 3/407, B41M 5/00, B44C 5/04, C04B 41/00, C04B 41/52, E04F 13/14, C04B 41/45, C04B 41/50, C04B 41/89

(54) **PROCESS FOR PRODUCING THREE-DIMENSIONAL TILES**

(30) Priority: 06.02.2024 IT 202400002467; 18.12.2024 IT 202400028950
(71) Applicant: Altadia Italia S.r.l., 41042 Fiorano Modenese (MO) (IT)
(72) Inventor: Bettoli, Michele, 48031 Bagnara di Romagna (RA) (IT); Iotti, Elisa, 41021 Fanano (MO) (IT); Giavelli, Eros, 42014 Castellarano (RE) (IT); Ferrari, Alessandro, 41013 Castelfranco Emilia (MO) (IT); Alex, Zanetti, 41058 Vignola (MO) (IT); Corradini, Cecilia, 41125 Modena (MO) (IT)
(74) Representative: Bird & Bird Società tra Avvocati S.r.l.

(57) **Abstract**

The present invention relates to a process for producing a three-dimensional tile, a three-dimensional tile obtained by said process and an article comprising said tile.

## Description

The present invention relates to a process for producing a three-dimensional tile, a three-dimensional tile obtained by said process and an article comprising said tile.

### STATE OF THE ART

As is known, the creation of a three-dimensional structure on the surface of a ceramic tile aims at improving its aesthetic and economic value, making it complicated, if not impossible, to precisely replicate it exclusively through digital colour prints. This objective has guided the development over time of various technologies for creating these three-dimensional structures.

These technologies can be divided into two main categories: additive technologies, which build the structure by adding material, and subtractive technologies, which exploit chemical-physical phenomena such as water repellency to create the structure by eliminating parts of the material itself. The most widely-used method for creating a three-dimensional structure on the surface of a tile generally involves the use of structured press pads, which have the shape of the desired structure in negative, which is then impressed on the surface of the tile through pressing. This approach, however, is effective only for certain formats of tiles having small dimensions. For large-sized tiles, it is in fact necessary to use preformed strips which, through direct pressure on the mixture, give shape to the structure. Although this method produces aesthetically pleasing results, it is quite expensive and has a limited versatility. This is because each structure requires a specific pad, which means that to vary the structures it is necessary to have numerous pads and interrupt the pressing process to replace them. With the introduction of modern digital printers and, above all, thanks to the creation of specific glues for these devices, a method that dates to the 70s' of the last century and is known in the sector as the "glue-grit method" has come back into fashion. This method involves applying a glue to the surface of the tile, followed by the addition of glass granules or other ceramic materials. The aim is to make these materials adhere to the surface using glue, a process mentioned in the document entitled *"*The Glazing of Ceramic Tiles" (page. 99, chapter 4.9, 1979, Assiceram).

The most modern application of the glue-grit method involves the use of digital printers for precisely depositing a glue that graphically represents the desired final structure. This methodology falls into the category of additive technologies. Glass granules or other ceramic materials are subsequently deposited over the entire surface or in specific points. Finally, the non-adhered material is removed from the surface by suction, leaving a three-dimensional structure composed of solid materials fixed using the adhesive. The suction can be regulated in terms of both height and power to ensure an efficient and precise suction of the non-fixed material (and thus obtain the final 3D structure). This suction step can be carried out by means of specifically adapted automated systems or by means of already known cyclones. The tile thus prepared is then subjected to high-temperature firing and the finished product is obtained by sintering (which is then left to cool).

There are various possibilities of creating structures with this system as they can be exploited in various contexts. Despite these advantages, the use of digital printers still has some limitations, in particular:
- the maximum thickness (in height) of the structure that can be obtained depends on the rheological characteristics of the glue and the particle size of the solid ceramic material and is usually equal to or less than 0.4 - 0.5 mm;
- with respect to the solid material to be deposited, there are often limitations at the plant level relating to the particle-size characteristics compatible with the final aesthetic result to be achieved. For this reason, the grit must be sifted and classified precisely, with an impact that is sometimes also significant in terms of costs;
- depending on the final aesthetic result to be obtained, it must be established beforehand where to create the three-dimensional structure, whether before or after digital printing of the colours;
- the choice of the solid to be adhered and the glue to be used is strongly influenced by the position on the production line in which the three-dimensional structure is created due to the surrounding system (engobe, glaze, etc.);
- the time that elapses between the application of the adhesive and the subsequent deposition of solid ceramic material is a determining factor as the adhesive tends to be absorbed by the support, thus making it partially unavailable for the adhesion of the solid; generally speaking, the greater the time that elapses between the deposition of the adhesive, the smaller the quantity of solid material that will adhere;
- there can often be problems with degassing the glue used, especially in cases where fine solid materials are used, as the glue must pass through the layer of the solid to volatilize. This can create bubble defects on the surface of the product;
- in terms of the final aesthetic result, obtaining variations in the surface appearance on the different areas of the structure formed on the ceramic piece, is particularly complex, as it presupposes the use of different ceramic solids on one or more application machines. This is because it is the chemical and mineralogical nature of the surface ceramic solid that determines this aspect; consequently, only by alternating solids having a different chemical and/or mineralogical composition is it possible to obtain these alternations after firing. The use of different solids complicates the process, as by its nature the solid that has not adhered to the surface of the piece can move away from the piece due to air turbulence or mechanical movement and contaminate the other solid. Furthermore, the risk of contamination of one solid on the other on the surface of the piece (causing aesthetic defects) is not negligible. Managing multiple solids is therefore in all respects a state-of-the-art problem. Furthermore, the level of surface variation that can be obtained by using multiple adhesives is not comparable to that obtained by changing the solid.

The present invention therefore aims at overcoming the disadvantages and solving the problems that characterize the prior art.

### OBJECT OF THE INVENTION

The present invention therefore relates to a process for producing a three-dimensional tile comprising the following steps:
a) providing a support (T), said support (T) preferably being a ceramic tile;
b) optionally, carrying out at least one of the following steps:
   b1) applying an engobe and/or a ceramic glaze on at least one surface (TS) of said support (T) and/or
   b2) decorating at least a portion of said surface (TS);
c) depositing a solid powder material on said at least one surface (TS) so as to form a uniform layer (PL);
d) printing at least one fixing agent in liquid form according to at least one given pattern;
e) removing unfixed solid powder material, preferably by means of suction;
f) Optionally, carrying out at least one of the following steps:
   f1) applying an engobe and/or a ceramic glaze on said at least one surface (TS) and/or
   f2) decorating at least a portion of said surface (TS);
g) subjecting the product obtained in step e) or f) to firing.

The present invention also relates to a three-dimensional tile that can be obtained by the process described above.

The present invention further relates to an article comprising a three-dimensional tile that can be obtained by the process described above.

For the purposes of this document, a three-dimensional tile is defined as a tile having a three-dimensional coating.

### DESCRIPTION OF THE DRAWINGS

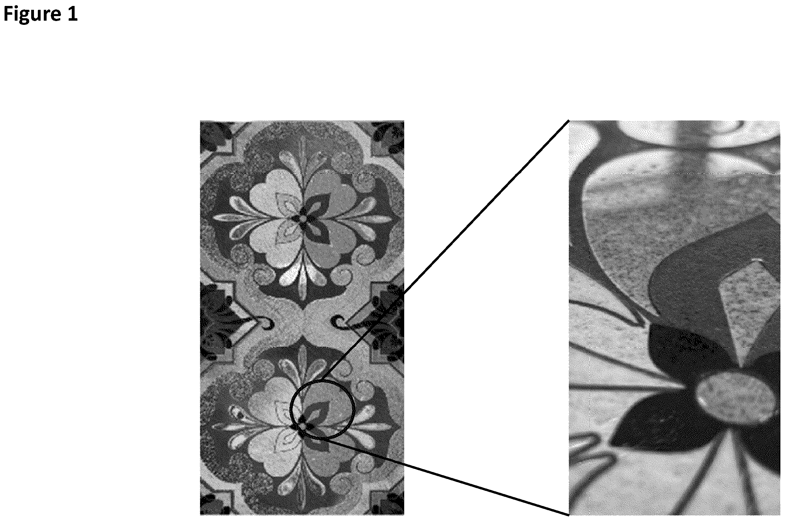

Figure 1 shows an example of a three-dimensional tile produced according to the present invention.

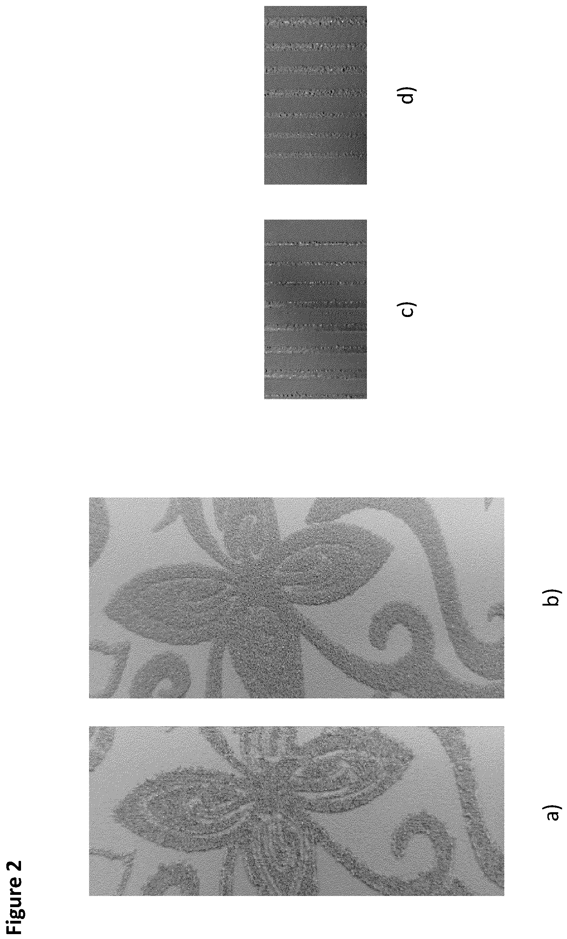

Figure 2 shows the difference between the decorative effect of a three-dimensional tile obtained according to the present invention (image a) and a three-dimensional tile obtained according to the state of the art (image b). Figure 2 also provides a detail of the difference in line obtained with the present invention (image c) compared to the state of the art (image d) with the same quantity of grit and fixing agent. In particular, it can be seen how the line obtained according to the present invention is finer (in particular, the line is equal to about 1 mm in image c) and about 1.5 mm in image d) and precise with respect to the method according to the state of the art.

At the same time, the line obtained according to the present invention is more evident, having a greater thickness (in height).

### DETAILED DESCRIPTION OF THE INVENTION

It has been surprisingly found that thanks to the present invention, it is possible to allow the fixing agent to easily permeate through the solid powder material deposited up to the surface to be treated (a step which is necessary for allowing the fixing of said solid material onto the surface of the support). This ease of permeation (which mainly derives from the porosity resulting from the incomplete compaction of the layer of deposited solid material) provides numerous advantages compared to the known art, in particular:
- a reduction in the average quantity of fixing agent to be applied (and in particular in the adhesive substance or substances contained therein);
- a reduction in defects caused by the degassing of the fixing agent. This is the case because, in the present invention, the fixing agent has greater ease in degassing as it remains less entrapped in the solid material deposited on the surface;
- obtaining on average greater three-dimensional coating thicknesses (up to 0.6 - 0.7 mm, compared to the 0.4 - 0.5 mm typical of the state of the art);
- obtaining more defined graphic contours (as can be seen in Figure 2);
- as it is possible to use inks compatible with digital printing, structures with different effects and/or colours can be easily obtained, that fit together perfectly (as will be analyzed in more detail hereunder);
- as the fixing agent (which, as previously mentioned, can also be coloured), permeates the fixed material, once the product obtained is subjected to firing, it can be smoothed without jeopardizing the aesthetic effect imparted during the process. This represents an important advantage with respect to the prior art, in which a smoothing treatment would risk removing the coloured print;
- possibility of making the fixed material water-repellent directly in the fixing step.

In one embodiment, said support (T) is a tile made of ceramic material. Even more preferably, said ceramic material is selected from the group consisting of terracotta, earthenware, stoneware and porcelain. Even more preferably, said ceramic material is stoneware. Alternatively, said support can be composed of or comprise materials such as resin, cement, wood, stone, vinyl or other materials known in the industry (such as, for example, PVC).

The support can already be provided with a basic decorative pattern, which is printed for example directly onto the support or laminated onto it using a known lamination method. In addition, the support supplied may already include one or more reliefs.

As already specified, it is also possible on said support to:
b1) apply an engobe and/or a ceramic glaze on at least one surface (TS) of said support (T) and/or b2) decorate at least one portion of said surface (TS).

It should be pointed out that step b2) can be performed before and/or after step b1) (if the latter is present). Step b2) is preferably carried out after step b1). The order in which the engobe and the ceramic glaze (if both are present) are applied in step b1) is not relevant for the purposes of this invention.

In other words, the surface (TS) of the support (T) on which the solid powder material is deposited (step c) of the process) can have an engobe and/or a ceramic glaze. If both of these components are present, the engobe layer can be located above or below the ceramic glaze layer. Alternatively, the surface (TS) can have one or more portions with an engobe layer and/or one or more portions with a ceramic glaze layer.

The term "ceramic glaze" refers to a composition suitable for application on a ceramic support and subsequent vitrification during firing. This composition, composed of various inorganic components, is generally ground in water and reduced to a predefined particle size. It is subsequently applied in liquid form on a ceramic support, or it is dried with different methods and then dispersed in water and applied. The ceramic glaze can comprise for example a ceramic frit, kaolin and ceramic additives (such as preservatives, sodium carboxymethylcellulose, sodium hexametaphosphate, sodium tripolyphosphate and mixtures thereof). Said ceramic glaze can contain additional ingredients such as: wollastonite, clay, nepheline, feldspar, calcium carbonate, dolomite, alumina, ceramic pigments or mixtures thereof. Said preservative can, for example, be a compound belonging to the isothiazolone family. The ceramic glaze can have the following composition:

| INGREDIENT | Weight Concentration (% m/m) |
|---|---|
| Ceramic frit | 70% |
| Kaolin | 6% |
| Wollastonite | 10% |
| Nepheline | 12% |
| Zinc oxide | 1% |
| Alumina | 1% |

Said ceramic glaze can be ground in sintered alumina ball mills with a wet process (with subsequent drying) or dry process to produce a powder with a particle size of less than 100 µm.

As is known, ceramic frits are described under EINECS number 266-047-6 and in Information Service on Chemical Substances (CAS) of the American Chemical Society under CAS number 65997-18-4, and are defined as *"a mixture of inorganic chemicals produced by the rapid cooling of a molten, complex combination of materials, confining the chemicals thus produced as non-migratory components of solid glassy flakes of granules"* A ceramic frit for example can have the following composition:

| | Weight concentration (% m/m) | Weight concentration range (% m/m) |
|---|---|---|
| **Na₂O** | 3 | 0-20 |
| **K₂O** | 2 | 0-20 |
| **MgO** | 3 | 0-15 |
| **CaO** | 11 | 0-30 |
| **SrO** | 5 | 0-20 |
| **BaO** | <1 | 0-20 |
| **ZnO** | <1 | 0-30 |
| **Al₂O₃** | 20 | 0-30 |
| **SiO₂** | 55 | 30-70 |

The technical function linked to the application of the engobe and/or ceramic glaze can comprise for example an interphase function between two successive applications, the protection of a decoration or colouring from chemical or staining agents on the fired tile, an improvement in resistance to abrasion or scratching, again on the fired tile. The aesthetic function can be linked to achieving a given aesthetic result after firing.

In one embodiment, in the optional step b) the engobe can be applied through special nozzles that atomize (nebulize) the engobe in liquid form on the surface (TS) of the support (T). Alternatively, the engobe can be deposited by continuous casting on the surface (TS) of the support (T) or by digital printing.

The engobe can be applied along the whole surface of the support (T) or only on a part of it (more preferably along the whole surface). The engobe can exert, for example, an interphase function.

It should be pointed out, however, that the engobe can also be applied downstream of the entire process according to the present invention (i.e. following the firing step). As described in more detail hereunder, the engobe and/or the ceramic glaze can also be applied following step e) for removing the unfixed solid powder material.

Said engobe can comprise for example clay and water. The engobe can have density values ranging from 0.1 to 5 g/cm³, more preferably from 0.8 to 2.5 g/cm³. The load of said engobe can range for example from 50 to 500 g for each m² of surface of the support (T) to be treated. The load of said engobe can however be greater, for example ranging from 10 to 1,000 g for each m² of surface of the support (T) to be treated.

The ceramic glaze and/or engobe can be applied in liquid or solid form with traditional or digital application machines. For example, water-based or solvent-based digital inks can be used.

The decoration step can also include a colouring step. Said decoration step can involve the free surface (TS) and/or the ceramic glaze and/or engobe applied to it. In an alternative embodiment, the optional step b) comprises the following steps: b1) applying an engobe and a ceramic glaze to at least one surface (TS) of said support (T) and b2) decorating at least a portion of said surface (TS).

In a further alternative embodiment, the optional step b) comprises the following steps: b1) applying an engobe on at least one surface (TS) of said support (T) and b2) decorating at least a portion of said surface (TS).

In a further alternative embodiment, the optional step b) comprises the following steps: b1) applying a ceramic glaze to at least one surface (TS) of said support (T) and b2) decorating at least a portion of said surface (TS).

In a further alternative embodiment, the optional step b) comprises the following steps: b1) applying an engobe and/or a ceramic glaze on at least one surface (TS) of said support (T).

In one embodiment, said fixing agent is applied in step d) by digital printing. Thanks to digital printing, it is in fact possible to apply the fixing agent rapidly and precisely using equipment common in the field. Said liquid fixing agent comprises one or more adhesive substances and, optionally, other additives known in the field. These components (i.e. adhesive substances and other additives) can be present in suspended form and/or dissolved in one or more solvents. Possible additives are coloured pigments, viscosity agents, dispersing agents, wetting agents, antioxidant agents, preservatives, inorganic raw materials and ceramic materials. Said liquid fixing agent can for example be a digital glue, an ink (for example a digital material ink, a digital structuring ink or a digital coloured ink) or a varnish, transparent or coloured, or any other material compatible with the desired application. Said fixing agent can for example provide a glossy or matt effect to create different visual effects.

Said liquid fixing agent can be water-based or organic depending on the solvent or solvents present therein. More specifically, different types of digital fixing agents are known in the field. Said fixing agents can be generically divided into solvent-based fixers (i.e. based on apolar solvents) and water-based fixers (i.e. fixers based on water and/or other polar solvents). Solvent-based fixers preferably comprise fatty acid esters and/or glycol ethers, whereas water-based fixers preferably comprise glycols and/or glycerin.

In particular, the use of water-based fixing agents is preferred as it allows a lower ecological impact. Said fixing agent can comprise an inorganic solid (such as zirconium silicate). The water-based fixing agent can have the following composition:

| **COMPONENT** | **WEIGHT CONCENTRATION RANGE (% m/m)** | **WEIGHT CONCENTRATION (% m/m)** |
|---|---|---|
| INORGANIC SOLID | 15-60% | 30 |
| GLYCERINE | 10-30% | 30 |
| WATER | 20-40% | 30 |
| DIETHYLENE GLYCOL | 2-15% | 10 |

The solvent-based fixing agent can have the following composition:

| **COMPONENT** | **WEIGHT CONCENTRATION RANGE (% m/m)** | **WEIGHT CONCENTRATION (% m/m)** |
|---|---|---|
| INORGANIC SOLID | 5-40% | 35 |
| FATTY ACID ESTERS | 50-85% | 60 |
| HYDROCARBONS C11-C25 | 0-10% | 5 |

In one embodiment, the time interval between the deposition of the solid powder material (step c)) and the printing of the fixing agent (step d)) is equal to or greater than 10 seconds, more preferably equal to or greater than 15 seconds. This time interval for example ranges from 10 seconds to 30 minutes.

In one embodiment, said printing pattern of the fixing agent substantially corresponds to a certain predefined decorative motif. In other words, the printing of the fixing agent can be performed according to a design with appropriate graphics depending on the desired aesthetic result to be obtained. Alternatively, the fixing agent can be printed along the entire surface to be treated.

Said step d) can be repeated two or more times to print two or more fixing agents, the same as or different from each other, according to one or more specific patterns.

In step d) it is in fact possible to perform a single print of a fixing agent according to a specific pattern. Alternatively, it is possible to perform two or more prints. In each of said two or more prints a fixing agent can be printed according to a specific pattern to create the desired visual effect. See for example Figure 1, in which four prints of four different fixing agents were performed. Each of said prints was performed according to a specific pattern.

The quantity of fixing agent applied in the printing step d) can vary depending on the pattern defined. For example, it can range from 10 g/m² to 180 g/m² per print (intended as g for each m² of surface of the support (T) to be treated). Different fixing agents can therefore be used (each with specific characteristics) for obtaining overlapping and/or interlocking and/or coloured graphic effects based on the specific aesthetic needs desired for the final result.

The use of different fixing agent prints can allow different visual effects and/or colour combinations to be created, suitable for the desired ceramic design.

These visual effects can for example consist of a "matt" effect (transparent or opaque) and/or a "glossy" effect (transparent or opaque) in different areas of the surface of the support. See for example Figure 1, in which both a matt and a gloss effect are present on the same surface.

Achieving a similar result would be particularly complex with the known processes of the state of the art, as it would be necessary to use a different combination of glue and solid for each shade of colour/effect present. Furthermore, the level of surface variation that can be obtained by using multiple glues and/or solids is not comparable to that obtained with the present invention.

In other words, thanks to the present invention, it is possible to obtain a product with different graphic/ceramic effects (such as that shown in Figure 1) in a single step (using equipment known in the state of the art).

In one embodiment, said fixing agent has a viscosity that can range from 0.008 (Ns)/m² to 0.040 (Ns)/m² at a temperature ranging from 40 to 50°C.

More preferably, said fixing agent has:
- a viscosity at 40°C which can range from 0.008 (Ns)/m² to 0.040 (Ns)/m² and/or
- a viscosity at 45°C which can range from 0.008 (Ns)/m² to 0.038 (Ns)/m² and/or
- a viscosity at 50°C which can range from 0.008 (Ns)/m² to 0.036 (Ns)/m².

Said fixing agent preferably has a surface tension at 25°C that can range from 25 mNm to 73 mNm.

In one embodiment, said solid powder material comprises or consists of glass granules and/or ceramic material (e.g., an atomized ceramic).

In particular, said solid powder material can comprise or consist of ceramic materials (i.e. compounds composed of metallic and non-metallic elements). Said ceramic materials are more preferably selected from oxides, carbides, nitrides, hydroxyapatite, kaolin, silicates, carbonates and mixtures thereof.

More specifically, said solid powder material can comprise or consist of: Zirconium Dioxide (ZrO₂), Magnesium Oxide (MgO), Aluminum Oxide (Al₂O₃), Silicon Dioxide (SiO₂), Silicon Nitride (Si₃N₄), Silicon Carbide (SiC), Calcium Oxide (CaO). Said ceramic material for example can be a ceramic grit, a ceramic frit, a clay, nepheline, feldspar, calcium carbonate, dolomite, alumina, or mixtures thereof. Said solid powder material is more preferably a mixture of oxides.

The term "ceramic grit" refers to materials obtained from ceramic frits through grinding that are applied to ceramic tiles to give aesthetic, structural and sometimes protective effects to the ceramic surface itself. The ceramic grit generally has a particle size defined in terms of (at least) maximum and minimum values. The ceramic grit for example can have the following composition:

| COMP ONEN T | WEIGHT CONCE NTRATI ON (% m/m) 1 | WEIGHT CONCE NTRATI ON (% m/m) 2 | WEIGHT CONCE NTRATI ON (% m/m) 3 | WEIGHT CONCE NTRATI ON (% m/m) 4 | WEIGHT CONCE NTRATI ON (% m/m) 5 | WEIGHT CONCE NTRATI ON RANGE (% m/m) |
|---|---|---|---|---|---|---|
| Al₂O₃ | 1 | 18 | 19 | 19 | 19 | 5-25 |
| B₂O₃ | <1 | <1 | <1 | <1 | <1 | 0-5 |
| SiO₂ | 55 | 56 | 56 | 54 | 53 | 45-65 |
| TiO₂ | <1 | <1 | <1 | <1 | <1 | 0-10 |
| ZrO₂ | <1 | <1 | <1 | <1 | <1 | 0-15 |
| CaO | 17 | 9 | 5 | 14 | 13 | 0-25 |
| MgO | <1 | <1 | 2 | <1 | <1 | 0-5 |
| ZnO | 4 | 4 | 5 | 5 | 5 | 0-15 |
| BaO | <1 | <1 | <1 | <1 | <1 | 0-15 |
| SrO | <1 | 4 | 5 | 2 | 2 | 0-15 |
| K₂O | <1 | <1 | 5 | 3 | 3 | 0-10 |
| Na₂O | 4 | 6 | 2 | 3 | 3 | 0-10 |
| Li₂O | <1 | <1 | <1 | <1 | <1 | 0-5 |

In one embodiment, said solid powder material may not comprise pigments.

Said solid material can be deposited on said at least one surface (TS) by techniques known in the art. The depositing of the solid powder material can be performed for example by means of a shot blaster or by a machine specialized in the discharge of solid material. The discharge of solid material can for example exploit methods for the deposition of solid material that comprise mechanisms such as hoppers, slots/holes (preferably pneumatically controlled) and/or vibration dropping mechanisms.

In one embodiment, the solid powder material is deposited along the entire surface (TS) of the support (this type of deposition is defined in the industry as "full field deposition"). Alternatively, the material can be deposited exclusively in certain areas of interest.

The quantity of solid powder material to be deposited is determined according to the final aesthetic effect to be obtained. The quantity of solid powder material in relation to the surface to be covered preferably ranges from 50 g/m² to 1,000 g/m².

Said solid powder material preferably has a particle-size distribution of the particles with:
- a D10 that ranges from 10 µm to 200 µm;
- a D50 that ranges from 50 µm to 250 µm;
- a D90 that ranges from 100 µm to 400 µm and
- a D99 that ranges from 200 µm to 800 µm.

Said solid powder material more preferably has a particle-size distribution with: a D10 ranging from 10 µm to 100 µm; a D50 ranging from 50 µm to 200 µm; a D90 ranging from 100 µm to 300 µm and a D99 ranging from 200 µm to 800 µm.

Said particle-size characteristics allow for an ideal permeation of the fixing agent and avoid problems relating to the turbulent transporting of fine particulate matter that could damage the digital print heads.

As previously specified, the process according to the present invention can also comprise the following optional steps f): f1) applying an engobe and/or a ceramic glaze on at least one surface (TS) of said support (T) and/or f2) decorating at least a portion of said surface (TS).

It should be pointed out that step f2) can be performed before and/or after step f1) (if the latter is present). Step f2) is preferably performed after step f1).

In one embodiment, the optional step f) comprises the following steps: f1) applying a ceramic glaze to at least one surface (TS) of said support (T) and f2) decorating at least a portion of said surface (TS).

In a further alternative embodiment, the optional step f) comprises the following steps: f1) applying an engobe and a ceramic glaze on at least one surface (TS) of said support (T) and/or f2) decorating at least a portion of said surface (TS).

In a further alternative embodiment, the optional step f) comprises the following steps: f1) applying an engobe to at least one surface (TS) of said support (T) and f2) decorating at least one portion of said surface (TS).

In a further alternative embodiment, the optional step f) comprises the following steps: f1) applying a ceramic glaze to at least one surface (TS) of said support (T) and f2) decorating at least one portion of said surface (TS).

The order in which the engobe and the ceramic glaze are applied (if both are present) in step f1) is not relevant. If both components are present, the engobe layer can be placed above or below the ceramic glaze layer. Alternatively, the surface (TS) can have one or more portions with an engobe layer and one or more portions with a ceramic glaze layer.

The firing step (in which sintering takes place) can be carried out at temperatures and/or times known in the state of the art. In particular, it is advisable to set the firing temperature and time depending on the material forming the support. For example, for ceramic tiles the following temperatures can be selected:
- for terracotta a temperature ranging from 960 to 1,030°C;
- for earthenware a temperature ranging from 960 to 1,150°C;
- for stoneware a temperature ranging from 1,190 to 1,300°C;
- for porcelain a temperature ranging from 1,200 to 1,300°C.

The firing time can range for example from 20 to 500 minutes, more preferably from 30 to 300 minutes.

Once the firing has been completed, a cooling step can be applied according to methodologies and/or times known in the field.

Before and/or after said cooling step or, alternatively, even before said firing step, there can be other steps known in the sector, such as for example colouring and/or glazing. Said glazing step can be carried out for example using brushes, spray guns, other known equipment or by immersion. The glaze can comprise for example silica powder and/or metal oxides. Said glaze can also have density values ranging from 0.1 to 5 g/cm³. The load of said glaze can range for example from 50 to 500 g for each m² of surface of the support (T) to be treated.

In one embodiment, the process according to the present invention comprises the following steps:
a) providing a support (T), said support (T) preferably being a ceramic tile;
b) carrying out at least one of the following steps:
   b1) applying an engobe and/or a ceramic glaze on at least one surface (TS) of said support (T) and/or
   b2) decorating at least a portion of said surface (TS);
c) depositing a solid powder material on said at least one surface (TS) so as to form a uniform layer (PL);
d) printing at least one liquid fixing agent according to at least one given pattern;
e) removing the unfixed solid powder material, preferably by means of suction;
g) subjecting the product obtained in step e) to firing.

In a further embodiment, the process according to the present invention comprises the following steps:
a) providing a support (T), said support (T) preferably being a ceramic tile;
c) depositing a solid powder material on said at least one surface (TS) so as to form a uniform layer (PL);
d) printing at least one fixing agent in liquid form according to at least one given pattern;
e) removing the unfixed solid powder material, preferably by means of suction means;
f) carrying out at least one of the following steps:
   f1) applying an engobe and/or a ceramic glaze on said at least one surface (TS) and/or
   f2) decorating at least a portion of said surface (TS);
g) subjecting the product obtained in step e) or f) to firing.

In other words, the optional steps b) and f) can both be present or, alternatively, the process can comprise only one of the two optional steps b) and f). In particular, the present invention can comprise a combination of the following optional steps:
- b1), b2), f1) and f2);
- b1), f1) and f2);
- b2), f1) and f2);
- b1), b2) and f1)
- b 1), b2) and f2)
- b1) and f1);
- b1) and f2);
- b2) and f1) or
- b2) and f2).

### EXAMPLES

### Example 1 - Production of a three-dimensional tile according to the present invention (water-based fixing agent)

Three tiles having dimensions of 60 cm x 120 cm were pre-treated in full field using special nozzles with a commercial white engobe having a density of 1,430 g/cm³ (with a quantity of engobe used equal to 300 g for each m² of surface of the tile to be treated).

A grit having the following particle size was subsequently deposited in full field on a surface of each tile using a shot blaster: D99 = 280µm; D90 = 190µm; D50 = 90µm (with a quantity of grit used equal to 450 g for each m² of surface of the tile to be treated).

A water-based fixing agent (comprising a mixture of water, glycols and glycerine) was then deposited according to a specific pattern using a digital printer (so as to apply 98 g, 136 g and 165 g respectively of fixing agent to the surface of the three tiles for each m² of surface to be treated).

After 7 seconds, the unfixed solid material was removed using special suction devices.

The tiles were then fired at 1,210°C for 82 minutes. The coloured inks for decoration and the full-field glaze (having a density of 1.40 g/cm³) were then discharged for a total of 330 g for each m² of surface of the tile to be treated.

The tiles were finally left to cool before carrying out the comparative tests described in the following paragraphs.

### Example 2 - Production of a three-dimensional tile according to the prior art (water-based fixing agent)

Three tiles having dimensions of 60 cm x 120 cm were pre-treated in full field using special nozzles with a commercial white engobe having a density of 1,430 g/cm³ (with a quantity of engobe used equal to 300 g for each m² of surface of the tile to be treated).

A water-based fixing agent (having the same composition as the fixing agent used in Example 1) was subsequently deposited on the surface of each tile according to a specific pattern using a digital printer so as to apply 98 g, 136 g and 165 g respectively of fixing agent to the surface of the three tiles for each m² of surface to be treated).

A grit having the following particle size was then deposited in full field on each of these surfaces using a shot blaster: D99 = 280 µm; D90 = 190 µm; D50 = 90 µm (with a quantity of grit used equal to 450 g for each m² of surface of the tile to be treated).

After 7 seconds, the unfixed solid material was removed using special suction devices.

The tiles were then fired at 1,210°C for 82 minutes.

The coloured inks for decoration and the full-field glaze (having a density equal to 1.40 g/cm³) were then discharged for a total of 330 g for each m² of surface of the tile to be treated.

In other words, the only difference between Example 1 and Example 2 is the order in which the fixing agent and grit are applied to the surface of the tiles.

### Example 3 - Production of a three-dimensional tile according to the present invention (solvent-based fixing agent)

Four tiles having dimensions of 60 cm x 120 cm were pre-treated in full field using special nozzles with a commercial white engobe having a density of 1,430 g/cm³ (with a quantity of engobe used equal to 300 g for each m² of surface of the tile to be treated).

A grit having the following particle size was then deposited in full field on each of these surfaces using a shot blaster: D99 = 280 µm; D90 = 190 µm; D50 = 90 µm (with a quantity of grit used equal to 450 g for each m² of surface of the tile to be treated).

A solvent-based fixing agent (comprising fatty acid esters) was subsequently deposited according to a specific pattern using a digital printer (so as to apply 42 g, 84 g, 117 g and 140 g respectively of fixing agent to the surface of the four tiles for each m² of surface to be treated).

After 7 seconds, the unfixed solid material was removed using special suction devices.

The tiles were then fired at 1,210°C for 82 minutes.

The coloured inks for decoration and the full-field glaze (having a density of 1.40 g/cm³) were then discharged for a total of 330 g for each m² of surface of the tile to be treated.

The tiles were finally left to cool before carrying out the comparative tests described in the following paragraphs.

### Example 4 - Production of a three-dimensional tile according to the prior art (solvent-based fixing agent)

Four tiles having dimensions of 60 cm x 120 cm were pre-treated in full field using special nozzles with a commercial white engobe having a density of 1,430 g/cm³ (with a quantity of engobe used equal to 300 g for each m² of surface of the tile to be treated).

A solvent-based fixing agent (having the same composition as the fixing agent used in Example 3) was subsequently deposited on a surface of each tile according to a specific pattern using a digital printer (so as to apply 42 g, 84 g, 117 g and 140 g respectively of fixing agent to the surface of the four tiles for each m² of surface to be treated).

A grit having the following particle size was then deposited in full field on each of these surfaces using a shot blaster: D99 = 280 µm; D90 = 190 µm; D50 = 90 µm (with a quantity of grit used equal to 450 g for each m² of surface of the tile to be treated).

After 7 seconds, the unfixed solid material was removed using special suction devices.

The tiles were then fired at 1,210°C for 82 minutes.

The coloured inks for decoration and the full-field glaze (having a density of 1.40 g/cm³) were then discharged for a total of 330 g for each m² of surface of the tile to be treated.

In other words, the only difference between Example 3 and Example 4 is the order in which the fixing agent and grit are applied to the surface of the tiles.

### Example 5 - Comparative tests

In order to compare the performances of the process according to the present invention with respect to the prior art, the quantities of solid material adhered to the surface at the end of the process were measured.

In particular, the quantities of solid material adhered were measured by determining the weight after each step and making the appropriate calculations to determine the quantity of grit adhered at the end of the process.

**TABLE 1**

| **Water-based fixing agent** | | | |
|---|---|---|---|
| | **Example 1** | **Example 2** | |
| **Quantity of fixing agent used (g/m²)** | **Quantity of adhered grit** | **Quantity of adhered grit (comparative)** | **Differenc e (%)** |
| 98 | 286 | 49 | 483.67 |
| 136 | 340 | 110 | 209.09 |
| 165 | 411 | 171 | 140.35 |

| **Solvent-based fixing agent** | | | |
|---|---|---|---|
| | **Example 3** | **Example 4 (comparative)** | |
| **Quantity of fixing agent used** | **Quantity of adhered grit** | **Quantity of adhered grit** | **Differenc e (%)** |
| 42 | 171 | 115 | 48.70 |
| 84 | 286 | 202 | 41.58 |
| 117 | 340 | 292 | 16.44 |
| 140 | 398 | 342 | 16.37 |

As can be seen from Table 1, thanks to the process according to the present invention, it is possible, with the same fixing agent used, to make a greater quantity of grit adhere both in the presence of a water-based fixing agent and in the presence of a solvent-based fixing agent. This difference is also more marked in the presence of a water-based fixing agent.

### Example 6 - Production of a three-dimensional tile according to the present invention (water-based fixing agent)

A tile having dimensions of 30 cm x 30 cm was pre-treated in full field using special nozzles with a commercial white engobe having a density of 1,450 g/cm³ (with a quantity of engobe used equal to 400 g for each m² of surface of the tile to be treated).

A grit deriving from the grinding of a ceramic frit with the following oxide composition was subsequently deposited on a surface of the tile in full field using a shot blaster (with a quantity of grit used equal to 330 g for each m² of surface of the tile to be treated):

| COMPONENT | Weight Concentration (% m/m) |
|---|---|
| Al₂O₃ | 1 |
| B₂O₃ | <1 |
| SiO₂ | 55 |
| TiO₂ | <1 |
| ZrO₂ | <1 |
| CaO | 17 |
| MgO | <1 |
| ZnO | 4 |
| BaO | <1 |
| SrO | <1 |
| K₂O | 1 |
| Na₂O | 4 |
| Li₂O | <1 |

and having the following particle size: D10 = 150 µm, D50 = 200 µm, D90 = 350 µm and D99 = 450 µm.

After 30 seconds, a water-based fixing agent (comprising a mixture of water, glycols and glycerine) was deposited according to a specific pattern using a digital printer in order to apply 100 g of fixing agent to the surface of the tile for each m² of surface to be treated.

In particular, the fixing agent has the following composition:

| COMPONENT | WEIGHT CONCENTRATION (%m/m) |
|---|---|
| ZIRCONIUM SILICATE | 30 |
| GLYCERIN | 30 |
| WATER | 30 |
| DIETHYLENE GLYCOL | 10 |

After 30 seconds, the unfixed solid material was removed using special suction devices. The coloured inks for decoration and the full-field glaze (with a density of 1.40 g/cm³) were then discharged for a total of 330 g for each m² of surface of the tile to be treated.

The tile was then fired at 1,210°C for 82 minutes.

The tile was finally left to cool.

### Example 7 - Production of a three-dimensional tile according to the prior art (water-based fixing agent)

A tile having dimensions of 30 cm x 30 cm was pre-treated in full field using special nozzles with a commercial white engobe having a density of 1,450 g/cm³ (with a quantity of engobe used equal to 400 g for each m² of surface of the tile to be treated).

A water-based fixing agent (having the same composition as the fixing agent used in Example 6) was subsequently deposited on the surface of each tile according to a specific pattern using a digital printer so as to apply 100 g of fixing agent on the surface of the tile for each m² of surface to be treated.

After 30 seconds, the same grit as Example 6 was deposited on a surface of the tile in full field using a shot blaster (with a quantity of grit used equal to 330 g for each m² of surface of the tile to be treated).

After 30 seconds, the unfixed solid material was removed using special suction devices.

The coloured inks for decoration and the full-field glaze (with a density of 1.40 g/cm³) were then discharged for a total of 330 g for each m² of the tile surface to be treated.

The tile was then fired at 1,210°C for 82 minutes.

The tile was subsequently left to cool. In other words, the only difference between Example 6 and Example 7 is the order in which the fixing agent and the grit are applied to the tile surface.

### Example 8 - Production of a three-dimensional tile according to the present invention (solvent-based fixing agent)

A tile having dimensions of 30 cm x 30 cm was pre-treated in full field using special nozzles with a commercial white engobe having a density of 1,450 g/cm³ (with a quantity of engobe used equal to 400 g for each m² of surface of the tile to be treated.

The same grit as Example 6 was subsequently deposited on a surface of the tile in full field using a shot blaster (with a quantity of grit used equal to 330 g for each m² of surface of the tile to be treated).

After 30 seconds, a solvent-based fixing agent (comprising fatty acid esters) was subsequently deposited on the surface of each tile according to a specific pattern using a digital printer so as to apply 100 g of fixing agent on the surface of the tile for each m² of surface to be treated.

The solvent-based fixing agent has the following composition:

| COMPONENT | WEIGHT CONCENTRATION (% m/m) |
|---|---|
| ZIRCONIUM | 35 |
| SILICATE | |
| FATTY ACID ESTERS | 60 |
| C11-C25 HYDROCARBONS | 5 |

After 30 seconds, the unfixed solid material was removed using special suction devices.

The coloured inks for decoration and the full-field glaze (having a density of 1.40 g/cm³) were subsequently discharged for a total of 330 g for each m² of surface of the tile to be treated.

The tile was then fired at 1,210°C for 82 minutes.

The tile was finally left to cool.

### Example 9 - Production of a three-dimensional tile according to the prior art (solvent-based fixing agent)

A tile having dimensions of 30 cm x 30 cm was pre-treated in full field using special nozzles with a commercial white engobe having a density of 1,450 g/cm³ (with a quantity of engobe used equal to 400 g for each m² of surface of the tile to be treated.

A solvent-based fixing agent (having the same composition as the fixing agent used in Example 8) was subsequently deposited on the surface of each tile according to a specific pattern using a digital printer so as to apply 100 g of fixing agent on the surface of the tile for each m² of surface to be treated.

After 30 seconds, the same grit as Example 8 was deposited on a surface of the tile in full field using a shot blaster (with a quantity of grit used equal to 330 g for each m² of surface of the tile to be treated).

After 30 seconds, the unfixed solid material was removed using special suction devices.

The coloured inks for decoration and the full-field glaze (having a density of 1.40 g/cm³) were subsequently discharged for a total of 330 g for each m² of surface of the tile to be treated.

The tile was then fired at 1,210°C for 82 minutes.

The tile was finally left to cool.

In other words, the only difference between Example 8 and Example 9 is the order in which the fixing agent and grit are applied to the surface of the tile.

### Example 10 - Comparative tests

In order to compare the performances of the process according to the present invention with respect to the prior art, the quantities of solid material adhered to the surface at the end of the application process were measured. In particular, the quantities of solid material adhered were measured by determining the weight after each step and effecting the appropriate calculations for determining the quantity of grit adhered at the end of the process.

**TABLE 2**

| **Water-based fixing agent** | | | |
|---|---|---|---|
| | **Example 6** | **Example 7 (comparative)** | |
| **Quantity of fixing agent used (g/m²)** | **Quantity of adhered grit (g/m²)** | **Quantity of adhered grit (g/m²)** | **Differenc e (%)** |
| 100 | 330 | 200 | 65% |

| **Solvent-based fixing agent** | | | |
|---|---|---|---|
| | **Example 8** | **Example 9 (comparative)** | |
| **Amount of fixing agent used** | **Quantity of adhered grit (g/m²)** | **Quantity of adhered grit (g/m²)** | **Differenc e (%)** |
| 100 | 330 | 220 | 50% |

As can be seen from Table 2, thanks to the process according to the present invention, it is possible, with the same fixing agent used, to make a greater quantity of grit adhere both in the presence of a water-based fixing agent and in the presence of a solvent-based fixing agent. This difference is also more marked in the presence of a water-based fixing agent.

## Claims

1. A process for producing a three-dimensional tile comprising the following steps:
a) providing a support (T), said support (T) preferably being a ceramic tile;
b) optionally, carrying out at least one of the following steps:
b1) applying an engobe and/or a ceramic glaze on at least one surface (TS) of said support (T) and/or
b2) decorating at least a portion of said surface (TS);
c) depositing a solid powder material on said at least one surface (TS) so as to form a uniform layer (PL);
d) printing at least one fixing agent in liquid form according to at least one given pattern;
e) removing the unfixed solid powder material, preferably by means of suction;
f) Optionally, carrying out at least one of the following steps:
f1) applying an engobe and/or a ceramic glaze on said at least one surface (TS) and/or
f2) decorating at least a portion of said surface (TS);
g) subjecting the product obtained in step e) or f) to firing.

2. The process according to claim 1, wherein said fixing agent is applied by digital printing.

3. The process according to one of the previous claims, wherein said fixing agent is water-based or solvent-based, more preferably water-based.

4. The process according to one of the previous claims, wherein said fixing agent comprises a compound selected from the group consisting of fatty acid esters, glycol ethers and mixtures thereof, or a compound selected from the group consisting of water, glycols, glycerin and mixtures thereof, more preferably said fixing agent comprises a mixture consisting of water, glycols and glycerin.

5. The process according to one of the previous claims, wherein said fixing agent has a density ranging from 0.75 to 2 g/cm³, more preferably from 0.95 to 1.7 g/cm³.

6. The process according to one of the previous claims, wherein said fixing agent has a viscosity which can range from 0.008 (Ns)/m² to 0.040 (Ns)/m² at a temperature ranging from 40 and 50°C, more preferably said fixing agent has:
• a viscosity at 40°C which can range from 0.008 (Ns)/m² to 0.040 (Ns)/m² and/or
• a viscosity at 45°C which can range from 0.008 (Ns)/m² to 0.038 (Ns)/m² and/or
• a viscosity at 50°C which can range from 0.008 (Ns)/m² to 0.036 (Ns)/m².

7. The process according to one of the previous claims, wherein said step d) is repeated two or more times to print two or more fixing agents, the same as or different from each other, according to one or more specific patterns.

8. The process according to one of the previous claims, wherein said solid powder material has a particle-size distribution with:
• a D10 ranging from 10 µm to 200 µm;
• a D50 ranging from 50 µm to 250 µm;
• a D90 ranging from 100 µm to 400 µm and
• a D99 ranging from 200 µm to 800 µm.

9. The process according to one of the previous claims, wherein the quantity of fixing agent applied in step d) ranges from 10 g/m² to 180 g/m² per print.

10. The process according to one of the previous claims, wherein said solid powder material comprises and/or is composed of glass granules and/or ceramic material, more preferably said solid powder material comprises and/or is composed of ceramic materials selected from carbides, nitrides, hydroxyapatite, kaolin, silicates, carbonates and mixtures thereof.
